# EUROPÄISCHE PATENTSCHRIFT

(11) **EP 1 676 062 B1**
(45) Veröffentlichungstag und Bekanntmachung des Hinweises auf die Patenterteilung: **05.03.2008**
(21) Anmeldenummer: 04787163.7
(22) Anmeldetag: 17.09.2004
(51) Int. Cl.: F16K 1/226, F16K 1/22

(54) **DROSSELKLAPPENSTUTZEN**
THROTTLE VALVE MOUNTING
TUBULURE DE VANNE PAPILLON

(30) Priorität: 20.10.2003 DE 10349265
(43) Veröffentlichungstag der Anmeldung: 05.07.2006
(73) Patentinhaber: Siemens VDO Automotive AG, 93055 Regensburg (DE)
(72) Erfinder: HANNEWALD, Thomas, 64347 Griesheim (DE)
(86) Internationale Anmeldenummer: PCT/EP2004/052225
(87) Internationale Veröffentlichungsnummer: WO 2005/040652

(56) Entgegenhaltungen:
- EP-A- 0 716 222
- AU-B- 447 291
- DE-A- 19 512 874
- GB-A- 936 472
- US-A- 3 291 443
- US-A- 4 290 615
- US-A- 5 326 077

## Beschreibung

Die Erfindung bezieht sich auf einen Drosselklappenstutzen. Drosselklappenstutzen sind bekannt. In der DE 195 12 874 A1 wird ein Drosselklappenstutzen beschrieben, der ein rohrartiges Gehäuse aufweist. Die Drosselklappe im Inneren dieses Gehäuses ist dabei auf einer Drosselklappenwelle befestigt, die quer zur Längsachse des rohrartigen Gehäuses an ihren freien Enden durch Ausnehmungen in der Gehäusewand hindurchführend und in zwei Lagern drehbar gelagert ist. Im geschlossenen Zustand trennt die Drosselklappe das Gehäuse in eine Saugseite und in eine Seite in der Umgebungsdruck herrscht. Bei diesen bekannten Drosselklappenstutzen ist nachteilig, dass durch den in der Saugseite anliegenden Unterdruck eine größere Menge an Leckluft über die Lager der Drosselklappenwelle und über die Kante der Drosselklappe in die Saugseite gelangen kann, was nicht erwünscht ist.

Die US 4,290,615 schildert ein vorbekanntes Ventil mit umlaufender Dichtung, während aus der US 3,291,443 ein einseitig gelagertes Absperrventil im Zusammenwirken mit einem elastischen Schlauch bekannt ist.

Der Erfindung liegt daher die Aufgabe zugrunde, einen Drosselklappenstutzen zu schaffen, durch den das nachteilige Einströmen von Leckluft zur Saugseite des Luftkanals weitgehend vermieden wird.

Die der Erfindung zugrunde liegende Aufgabe wird durch einen Drosselklappenstutzen mit einem rohrartigen Gehäuse gelöst, in dem eine Drosselklappe senkrecht zur Strömungsrichtung im rohrartigen Gehäuse auf einer senkrecht zur Strömungsrichtung im rohrartigen Gehäuse angeordneten Drosselklappenwelle befestigt ist, wobei in der Saugseite Unterdruck anliegt und erfindungsgemäß die Drosselklappenwelle einseitig an einem, zum Stellantrieb benachbart angeordneten Lager drehbar gelagert ist und die Drosselklappe an ihrer Außenkante eine umlaufende Dichtung aufweist, die lediglich im Bereich des Lagers einen Spalt aufweist. Das rohrartige Gehäuse ist in der Regel zweiteilig ausgebildet und besteht in besonders vorteilhafter Weise aus Aluminium. Das Befestigen der Drosselklappe an der Drosselklappenwelle kann beispielsweise durch Verschrauben oder durch Verkleben erfolgen. Die Drosselklappenwelle ist einseitig an einem, zum Stellantrieb benachbart angeordneten Lager drehbar gelagert. Eine Lagerung ist somit nur an einem Ende der Drosselklappenwelle vorgesehen. Die umlaufende Dichtung weist lediglich im Bereich des Lagers einen Spalt auf, der dem Durchbruch der Drosselklappenwelle zum Lager dient. Sie liegt im geschlossenen Zustand bündig am rohrartigen Gehäuse des Drosselklappenstutzens an.

Es hat sich in überraschender Weise gezeigt, dass mit dem Drosselklappenstutzen ein nachteiliges Einströmen von Leckluft zur Saugseite des Luftkanals im rohrartigen Gehäuse nahezu vollständig vermieden wird. Da die Drosselklappenwelle im Gehäuse nur einseitig gelagert wird, ist die umlaufende Dichtung nur durch einen einzigen Spalt im Bereich des Lagers unterbrochen, was ein Einströmen von Leckluft nahezu vollständig unterbindet. Darüber hinaus ist vorteilhaft, dass auch ohne Schrägstellung der Drosselklappe eine umlaufende Dichtung angeordnet werden kann, wobei das einseitig gelagerte Wellenende der Drosselklappenwelle in dem Spalt der umlaufenden Dichtung positioniert wird. Darüber hinaus ist vorteilhaft, dass zur Vermeidung des Einströmens von Leckluft keinerlei Veränderungen am Gehäuse erforderlich sind. Die Drosselklappenwelle ist konstruktiv relativ einfach gestaltet und somit preiswert herzustellen. Die Anordnung der umlaufenden Dichtung ist einfach und montagefreundlich, so dass eine Serienfertigung in vorteilhafter Weise begünstigt wird.

Eine bevorzugte Ausgestaltung der Erfindung besteht darin, dass die Drosselklappe an ihrer Außenkante eine umlaufende Nut aufweist, in der die umlaufende Dichtung angeordnet ist. Dabei ist vorteilhaft, dass die umlaufende Dichtung formschlüssig in der umlaufenden Nut gehalten werden kann, wobei auf zusätzliche Befestigungsmittel verzichtet wird.

Gemäß einer weiteren Ausgestaltung der Erfindung ist vorgesehen, dass als umlaufende Dichtung ein flacher Metallring angeordnet ist. Dieser kann auf besonders einfache Weise in die umlaufende Nut der Drosselklappe eingebracht werden, was das dichte Abschließen der Saugseite des Luftkanals im besonderen Maße vereinfacht und verstärkt.

Nach einer weiteren Ausgestaltung der Erfindung ist als umlaufende Dichtung ein Toleranzring aus Kunststoff angeordnet. Der Toleranzring aus Kunststoff kann dabei auch beispielsweise aus Polytetrafluorethylen bestehen. Er ist in der Regel als Flachring ausgeführt und weist einen durchgehenden Spalt auf. Beim Abschließen der Saugseite des Luftkanals wird die Außenseite des Toleranzringes gegen den Luftkanal gedrückt, so dass sich der Spalt verkleinert bzw. ganz aufgehoben wird. Die dadurch im Toleranzring entstehende Spannung drückt den Toleranzring zusätzlich gegen die Innenwand des Luftkanals, der durch das rohrartige Gehäuse gebildet wird, was ein dichtes Abschließen zur Saugseite des Luftkanals verstärkt.

Eine weitere bevorzugte Ausgestaltung der Erfindung besteht darin, dass die Drosselklappen mittig einen Hülsenabschnitt aufweist, der innen komplementär zur Drosselklappenwelle ausgebildet ist. Dabei ist vorteilhaft, dass die Drosselklappenwelle in den Hülsenabschnitt eingebracht und allein durch Reibschluss fixiert werden kann. Auf zusätzliche Befestigungsmittel, wie beispielsweise Schrauben oder Nieten, kann dabei in vorteilhafter Weise verzichtet werden.

Die Erfindung wird nachfolgend anhand der Zeichnungen (Fig. 1 bis Fig. 3) näher und beispielhaft erläutert.
- Fig. 1: zeigt den Drosselklappenstutzen im Längsschnitt.
- Fig. 2: zeigt den Drosselklappenstutzen im Längsschnitt in dreidimensionaler Form.
- Fig. 3: zeigt eine perspektivische Ansicht der Drosselklappe mit einem Hülsenabschnitt und einer umlaufenden Dichtung.

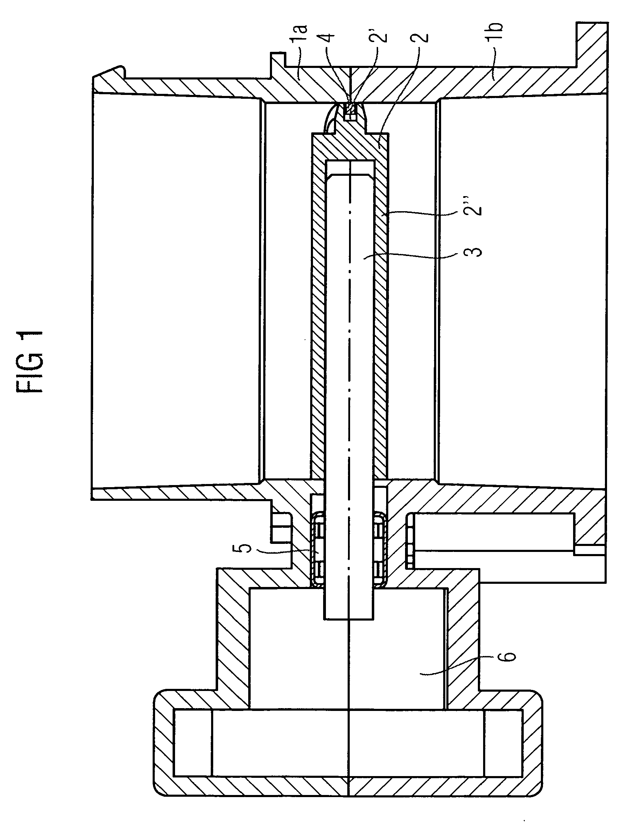

In Fig. 1 ist der Drosselklappenstutzen im Längsschnitt dargestellt. Er weist ein rohrartiges Gehäuse 1a, 1b auf, das zweiteilig ausgeführt ist. In dem rohrartigen Gehäuse 1a, 1b ist eine Drosselklappe 2 senkrecht zur Strömungsrichtung im rohrartigen Gehäuse 1a, 1b auf einer senkrecht zur Strömungsrichtung im rohrartigen Gehäuse 1a, 1b angeordneten Drosselklappenwelle 3 befestigt. Die Drosselklappenwelle 3 ist einseitig an einem, zum Stellantrieb 6 benachbart angeordneten Lager 5 drehbar gelagert. Der Stellantrieb 6 ist lediglich schematisch und vereinfacht dargestellt. Durch den Stellantrieb 6 wird die Drosselklappenwelle 3 in eine Drehbewegung versetzt. An ihrer Außenkante weist die Drosselklappe 2 eine umlaufende Dichtung 4 auf, die lediglich im Bereich des Lagers 5 einen Spalt (nicht dargestellt) aufweist. Die umlaufende Dichtung 4 ist dabei in einer umlaufenden Nut 2' der Drosselklappe 2 angeordnet. In besonders vorteilhafter Weise kann die umlaufende Dichtung 4 als flacher Metallring angeordnet sein. Eine weitere bevorzugte Ausgestaltung der umlaufenden Dichtung 4 liegt in der Anordnung eines Toleranzringes aus Kunststoff. Die Drosselklappe 2 weist mittig einen Hülsenabschnitt 2 " auf, der innen komplementär zur Drosselklappenwelle 3 ausgebildet ist. Dabei ist vorteilhaft, dass die Drosselklappe 2 auf relativ einfache Weise auf die Drosselklappenwelle 3 aufgeschoben und reibschlüssig fixiert werden kann, so dass keine weiteren Befestigungsmittel erforderlich sind.

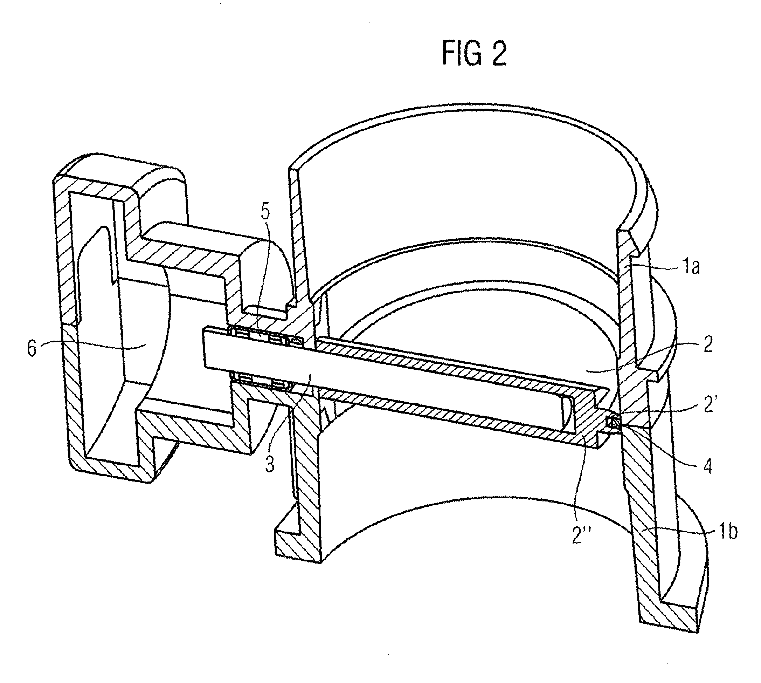

In Fig. 2 ist der Drosselklappenstutzen im Längsschnitt dreidimensional dargestellt. Auch in Fig. 2 wurde auf die Darstellung der Einzelteile des Stellantriebs 6 aus Gründen der Übersichtlichkeit verzichtet.

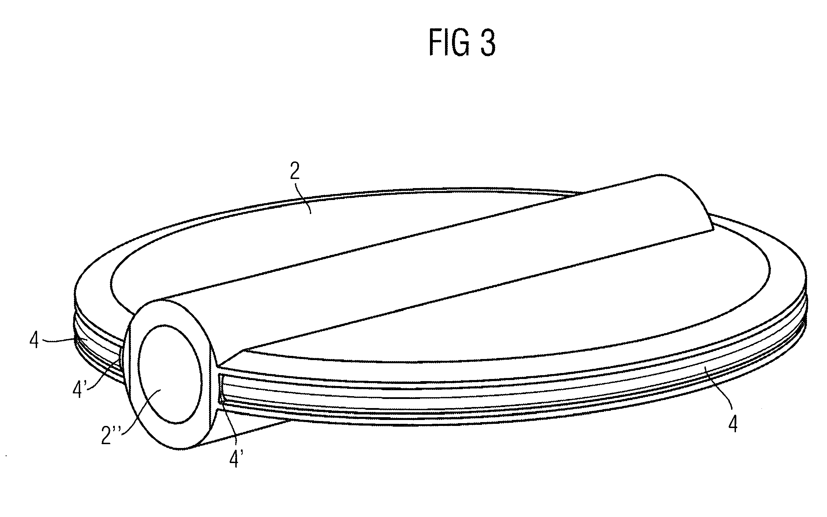

In Fig. 3 ist die Drosselklappe 2 dreidimensional dargestellt. Sie weist einen Hülsenabschnitt 2" zur Aufnahme der Drosselklappenwelle (nicht dargestellt) auf. In der umlaufenden Nut (nicht dargestellt) der Drosselklappe 2 ist eine umlaufende Dichtung 4 angeordnet, die lediglich im Bereich des Lagers (nicht dargestellt) einen Spalt 4' aufweist. Die umlaufende Dichtung 4 ist dabei konstruktiv so ausgebildet, dass sie beim Abschließen des Luftkanals des rohrartigen Gehäuses (nicht dargestellt) den Spalt 4' minimiert. Auf diese Weise wird eine relativ hohe Dichtwirkung erzielt.

## Patentansprüche

1. Drosselklappenstutzen mit einem rohrartiges Gehäuse (1a, 1b), in dem eine Drosselklappe (2) senkrecht zur Strömungsrichtung im rohrartigen Gehäuse (1a, 1b) auf einer senkrecht zur Strömungsrichtung im rohrartigen Gehäuse (1a, 1b) angeordneten Drosselklappenwelle (3) befestigt ist, wobei im Gebrauch in der Saugseite Unterdruck anliegt, **dadurch gekennzeichnet, dass**
die Drosselklappenwelle (3) einseitig an einem, zum Stellantrieb (6) benachbart angeordneten Lager (5) drehbar gelagert ist und die Drosselklappe (2) an ihrer Außenkante eine umlaufende Dichtung (4) aufweist, die lediglich im Bereich des Lagers (5) einen Spalt (4') aufweist.

2. Drosselklappenstutzen nach Anspruch 1, bei dem die Drosselklappe (2) an ihrer Außenkante eine umlaufende Nut (2') aufweist, in der die umlaufende Dichtung (4) angeordnet ist.

3. Drosselklappenstutzen nach Anspruch 2, bei dem als umlaufende Dichtung (4) ein flacher Metallring angeordnet ist.

4. Drosselklappenstutzen nach Anspruch 2, bei dem als umlaufende Dichtung (4) ein Toleranzring aus Kunststoff angeordnet ist.

5. Drosselklappenstutzen nach einem der Ansprüche 1 bis 4, bei dem die Drosselklappe (2) mittig einen Hülsenabschnitt (2") aufweist, der innen komplementär zur Drosselklappenwelle (3) ausgebildet ist.

## Claims

1. Throttle body having a tubular housing (1a, 1b), in which a throttle valve (2) is secured, perpendicular with respect to the direction of flow in the tubular housing (1a, 1b), on a throttle shaft (3) arranged perpendicular with respect to the direction of flow in the tubular housing (1a, 1b), negative pressure being present in the suction side in use, **characterized in that** the throttle shaft (3) is mounted rotatably on one side on a bearing (5) arranged adjacent to the actuator (6), and the throttle valve (2) has, on its outer edge, a peripheral seal (4) which has a gap (4') only in the region of the bearing (5).

2. Throttle body according to Claim 1, in which the throttle valve (2) has, on its outer edge, a peripheral groove (2') in which the peripheral seal (4) is arranged.

3. Throttle body according to Claim 2, in which a flat metal ring is arranged as the peripheral seal (4).

4. Throttle body according to Claim 2, in which a plastic tolerance ring is arranged as the peripheral seal (4).

5. Throttle body according to one of Claims 1 to 4, in which the throttle valve (2) has, centrally, a sleeve section (2") which is designed on the inside in a complementary manner to the throttle shaft (3).

## Revendications

1. Tubulure à papillon de régulation des gaz ayant un boîtier ressemblant à un tube (1a, 1b), dans laquelle un papillon de régulation des gaz (2) est fixé perpendiculairement à la direction du flux dans le boîtier ressemblant à un tube (1a, 1b) sur un arbre (3) de papillon de régulation des gaz disposé dans le boîtier ressemblant à un tube (1a, 1b) perpendiculairement à la direction du flux, alors que, en fonctionnement, une dépression règne dans le côté aspiration, **caractérisé par le fait que** l'arbre (3) du papillon de régulation des gaz est monté en rotation, d'un seul côté, dans un palier (5) disposé à proximité du mécanisme de commande (6) et que le papillon de régulation des gaz (2) comporte, sur son arête extérieure, un joint circulaire (4) qui n'a une fente (4') que dans la zone du palier (5).

2. Tubulure à papillon de régulation des gaz selon la revendication 1, dans laquelle le papillon de régulation des gaz (2) comporte, sur son arête extérieure, une rainure circulaire (2') dans laquelle est placé le joint circulaire (4).

3. Tubulure à papillon de régulation des gaz selon la revendication 2, dans laquelle une bague métallique plate est placée en tant que joint circulaire (4).

4. Tubulure à papillon de régulation des gaz selon la revendication 2, dans laquelle une bague de tolérance en matière plastique est placée en tant que joint circulaire (4).

5. Tubulure à papillon de régulation des gaz selon l'une des revendications 1 à 4, dans laquelle le papillon de régulation des gaz (2) comporte, en son milieu, une partie en forme de douille (2") qui est intérieurement complémentaire à l'arbre (3) du papillon de régulation des gaz.
